# EUROPEAN PATENT APPLICATION

(11) **EP 2 693 296 A1**
(43) Date of publication of application: **05.02.2014**
(21) Application number: 13177189.1
(22) Date of filing: 19.07.2013
(51) Int. Cl.: G06F 1/18, G06F 1/16

(54) **Mounting structure for removable unit and electronic apparatus provided with that mounting structure**

(30) Priority: 31.07.2012 JP 2012170179
(71) Applicant: FUJITSU LIMITED, Kawasaki-shi, Kanagawa 211-8588 (JP)
(72) Inventor: Hoshi, Masahiko, Kawasaki-shi, Kanagawa 211-8588 (JP); Tanaka, Kaigo, Yokohama-shi, Kanagawa 222-0033 (JP)
(74) Representative: Ward, James Norman

(57) **Abstract**

The mounting structure provided with pluralities of guide ribs having a fixed part and a moving part at both sides of a mounting region of an optical disk unit in an electronic apparatus, the fixed part projects out from a bottom surface of the mounting region along a direction of insertion of the optical disk unit into the mounting region and the moving part which swingably extends from the downstream side of the fixed part, the vicinity of a front end part of the moving part of at least one of the plurality of guide ribs which are provided at one side oaf the mounting region being provided with a projection which engages with a screw hole which is provided yin advance in the optical disk unit, so that the optical disk unit is locked by the projection when the optical disk unit is completely housed in the mounting region.

## Description

### CROSS-REFERENCE TO RELATED APPLICATION

This application claims priority from, and incorporates by reference the entire disclosure of, Japanese Patent Application No. 2012-170179, filed on July 31, 2012.

### FIELD

The present application relates to a mounting structure of a removable unit such as a hard disk drive unit, optical disk drive unit, or other disk drive unit which is designed to be mounted inside a housing of an electronic apparatus and to an electronic apparatus which is provided with that mounting structure. Note that, after this, a disk drive unit will be simply referred to as a "disk unit".

### BACKGROUND

In the past, electronic apparatuses have both been used standing alone and have been used attached to other large systems. In the latter case, the electronic apparatuses are removably installed in the other large systems through mounting structures. In this case, the electronic apparatuses are installed in the large systems through brackets or mounting hardware called "adapters". For example, an example where the electronic apparatus is a wireless device and is mounted in an automobile, boat, etc. through an adapter is disclosed in Japanese Laid-Open Patent Publication No. 60-60798.

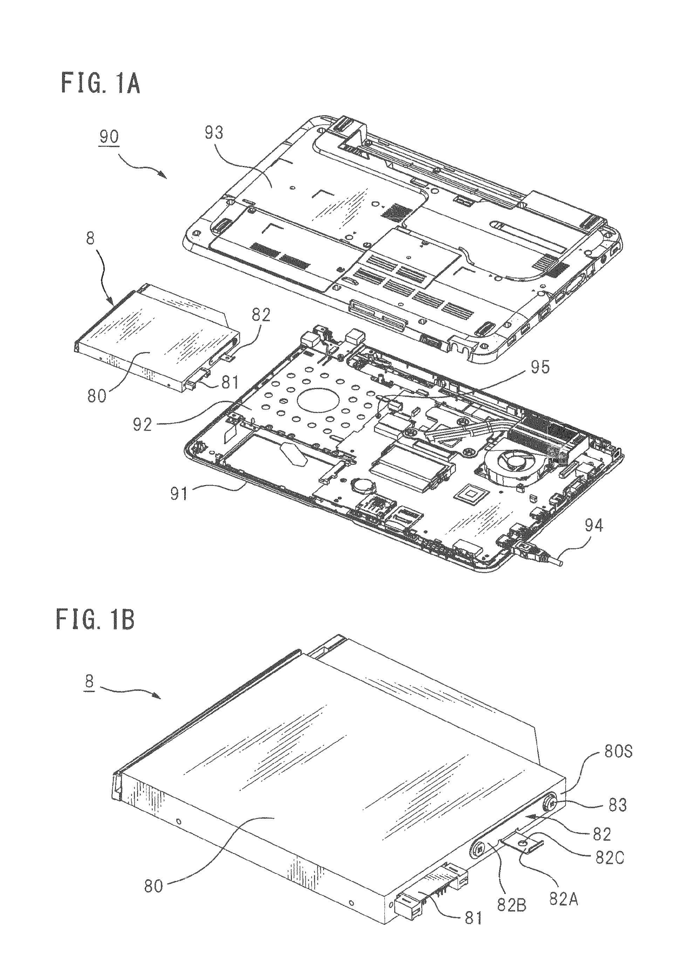

On the other hand, as opposed to this, sometimes other small electronic devices are used mounted as removable units inside of electronic apparatuses. As an example of this, for example, the case where a hard disk unit or optical disk unit is mounted in an electronic apparatus such as a computer may be mentioned. Further, when another small electronic device is mounted inside of an electronic apparatus, that other small removable unit is fastened by mounting hardware to the inside of the electronic apparatus. An example of the case where the removable unit is an optical disk unit will be explained using FIGS. 1A and 1B.

FIG. 1A is a disassembled perspective view which illustrates the configuration of an electronic apparatus 90 of a comparative art of the present application. The figure illustrates a main component 91 of an electronic apparatus and an optical disk unit 8 which is housed in a disk unit mounting region 92 of the bottom cover and main component 91 of the electronic apparatus. In the electronic apparatus 90 of the comparative art, as illustrated in FIG. 1B, one side surface of the optical disk unit 8 is provided with an input/output connector 81 and mounting hardware 82 for fastening the optical disk unit 8 to the main component 91 of the electronic apparatus.

The mounting hardware 82 is provided with a base part 82B which is fastened by screws 83 to one side surface of the optical disk unit 8 and an arm part 82A which extends from the end part of a center part of the base part 82B. The arm part 82A has a screw hole 82C. The optical disk unit 8 is first inserted into the disk unit mounting region 92 which is illustrated in FIG. 1A. After that, the optical disk unit 8 is fastened by attaching the arm part 82A of the mounting hardware 82 to a disk unit fastening hole 95 at the main component 91 of the electronic apparatus by a screw (not illustrated) which has been passed through the screw hole. Reference numeral 94 indicates a power cord. When using the mounting hardware 82 and fastening the optical disk unit 8 through the base part 82B in this way, three screws are used. The mounting hardware 82 need not be at the same side as the input/output connector 81 of the optical disk unit 8, so the side surfaces of an optical disk unit 8 are usually provided with pluralities of screw holes for attaching other mounting hardware.

Inside of an electronic apparatus, it is also possible to mount not only an optical disk unit, but a hard disk unit. This case is similar. The hard disk unit has similar mounting hardware attached to it and is loaded inside the electronic apparatus, then the mounting hardware is used to fasten the hard disk unit to the electronic apparatus.

In this regard, recent notebook type computers have been asked to be made thinner, lighter, and less expensive. This is becoming difficult with the system of using mounting hardware to mount a disk unit in a computer as explained in the comparative art. That is, to provide an apparatus at low cost, it is necessary to slash the prime costs, but the prime costs have to be lowered while maintaining the quality. For this reason, a simple hardware design which eliminates screws while maintaining the structural performance has been sought.

### SUMMARY

In one aspect, the present application provides a mounting structure of a removable unit in an electronic apparatus inside of which a disk unit or other removable unit is mounted, wherein the removable unit is fastened to the electronic apparatus without using screws but by utilizing members originally present in the electronic apparatus so as to thereby simplify the structure and an electronic apparatus which is provided with that mounting structure.

According to one aspect, there is provided a mounting structure of a removable unit in an electronic apparatus, wherein two sides of a mounting region of a removable unit in the electronic apparatus are respectively provided with pluralities of guide ribs, each guide rib is provided with a fixed part which projects from a bottom surface of the mounting region along a direction of insertion of the removable unit into the mounting region and a moving part which extends to be able to swing from one end of the fixed part in the direction of insertion of the removable unit, a projection which sticks out to the mounting region side is provided at a front end part of the moving part of at least one of the guide ribs which are provided at one side of the mounting region, the positions of the projections correspond to positions of screw holes which are provided at side surfaces of the removable unit when the removable unit is completely housed in the mounting region, and the projections respectively fit into the screw holes in the state where the removable unit is completely housed in the mounting region.

Further, according to another aspect, there is provided an electronic apparatus which is provided with a mounting structure of a removable unit, wherein two sides of a mounting region of a removable unit in the electronic apparatus are respectively provided with pluralities of guide ribs, each guide rib is provided with a fixed part which projects from a bottom surface of the mounting region along a direction of insertion of the removable unit into the mounting region and a moving part which extends to be able to swing from one end of the fixed part in the direction of insertion of the removable unit, a projection which sticks out to the mounting region side is provided at a front end part of the moving part of at least one of the guide ribs which are provided at one side of the mounting region, the positions of the projections correspond to positions of screw holes which are provided at side surfaces of the removable unit when the removable unit is completely housed in the mounting region, and the projections respectively fit into the screw holes in the state where the removable unit is completely housed in the mounting region.

### BRIEF DESCRIPTION OF DRAWINGS

FIG. 1A is a disassembled perspective view which illustrates a configuration of an electronic apparatus of a comparative art which is provided with an optical disk unit.

FIG. 1B is an enlarged view of the optical disk unit which is illustrated in FIG. 1A.

FIG. 2A is a perspective view which illustrates a main component of an electronic apparatus of the present application and an optical disk unit which is mounted at that main component.

FIG. 2B is a perspective view of the optical disk unit which is illustrated in FIG. 2A seen turned upside down.

FIG. 3 is a five-direction view which illustrates the five surfaces of the optical disk unit which is illustrated in FIGS. 2A and 2B other than the surface on which a hub is provided and an explanatory view which illustrates guide ribs.

FIG. 4A is a perspective view which illustrates the extracted principal parts of a main component of the electronic apparatus which is illustrated in FIG. 2A.

FIG. 4B is a partially enlarged view of a part A of FIG. 4A.

FIG. 4C is a perspective view of the portion which is illustrated in FIG. 4A as seen from an opposite side direction.

FIG. 4D is a partially enlarged view of a part B of FIG. 4C.

FIG. 5A is a plan view which illustrates the extracted principal parts of a main component of the electronic apparatus which is illustrated in FIG. 2A.

FIG. 5B is a side view as seen from a line A-A of FIG. 5A.

FIG. 5C is a side view as seen from a line B-B of FIG. 5A.

FIG. 6A is a plan view which illustrates a state where an optical disk unit is mounted at the main component of the electronic apparatus which is illustrated in FIG. 2A.

FIG. 6B is a partially enlarged view of a part C of FIG. 6A.

FIG. 7A is a partially enlarged plan view which illustrates a first embodiment of arrangement of engagement projections for fastening a disk unit at a disk unit mounting region of an electronic apparatus of the present application.

FIG. 7B is a cross-sectional view along a line D-D of FIG. 7A.

FIG. 7C is a cross-sectional view along a line E-E of FIG. 7A.

FIG. 8A is a partially enlarged plan view which illustrates a second embodiment of arrangement of engagement projections for fastening a disk unit at a disk unit mounting region of an electronic apparatus of the present application.

FIG. 8B is a cross-sectional view along a line F-F of FIG. 8A.

FIG. 9A is a partially enlarged plan view which illustrates a third embodiment of arrangement of engagement projections for fastening a disk unit at a disk unit mounting region of an electronic apparatus of the present application.

FIG. 9B is a cross-sectional view along a line G-G of FIG. 9A.

FIG. 10A is a partially enlarged plan view which illustrates a fourth embodiment of arrangement of engagement projections for fastening a disk unit at a disk unit mounting region of an electronic apparatus of the present application.

FIG. 10B is a cross-sectional view along a line H-H of FIG. 10A.

FIG. 10C is a cross-sectional view along a line J-J of FIG. 10A.

FIG. 11A is a partially enlarged plan view which illustrates a fifth embodiment of arrangement of engagement projections for fastening a disk unit at a disk unit mounting region of an electronic apparatus of the present application.

FIG. 11B is a cross-sectional view along a line K-K of FIG. 11A.

FIG. 11C is a cross-sectional view along a line L-L of FIG. 11A.

FIG. 12A is a bottom surface view of a hard disk unit of another example which is mounted at the electronic apparatus of the present application.

FIG. 12B is a five-direction view which illustrates the five surfaces of the hard disk unit which is illustrated in FIG. 12A other than the bottom surface.

### DESCRIPTION OF EMBODIMENTS

Below, using the attached drawings, embodiments of the present application will be explained in detail based on specific examples. Note that, as the removable unit, there are a media write unit, media read unit, disk unit, optical disk unit, hard disk unit, etc., but here an optical disk unit will be explained as a representative example.

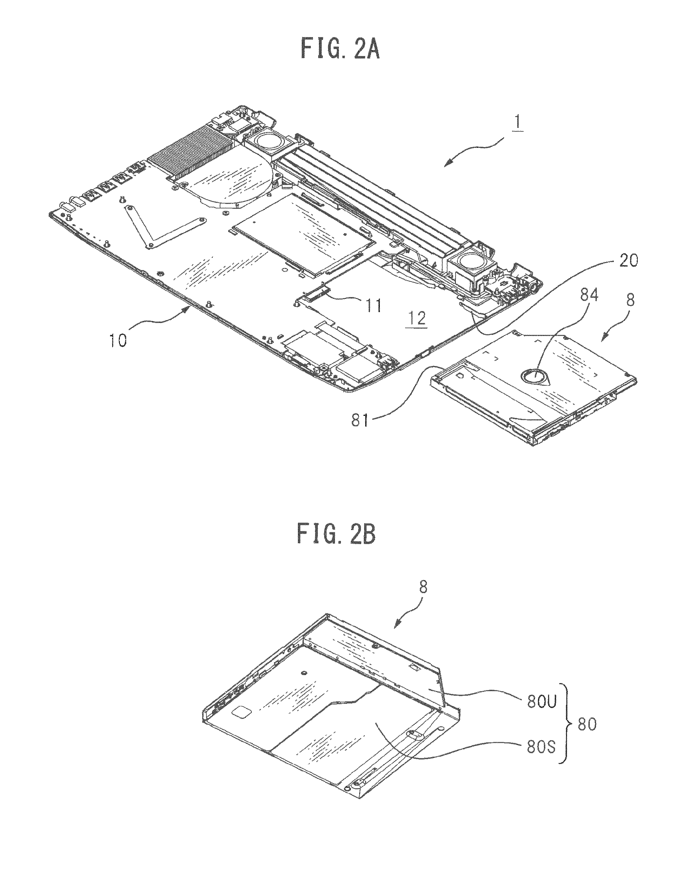

FIG. 2A is a perspective view which illustrates a main component 10 of an electronic apparatus 1 according to the present application and an optical disk unit 8 which is mounted at that main component 10, while FIG. 2B is a perspective view of the optical disk unit 8 which is illustrated in FIG. 2A seen turned upside down. The optical disk unit 8 is a standard unit which was explained in FIGS. 1A and 1B, but is not provided with mounting hardware at the side surface where the input/output connector 81 is provided. The optical disk unit 8 is inserted by sliding it into a disk unit mounting region 12 which is provided at the main component. An input/output connector 11 which is provided at the main component 10 is connected to the input/output connector 81 of the optical disk unit 8. Reference numeral 84 is a hub for rotation of an optical disk inside the optical disk unit 8.

When the optical disk unit 8 is inserted by being slid into the disk unit mounting region 12 which is provided at the main component 10, the disk unit mounting region 12 is generally provided with guide ribs 20 which assist slide insertion of the optical disk unit 8. When the bottom surface of the disk unit mounting region 12 is formed by plastic, the guide ribs 20 are plastic ridges which are integrally formed with the bottom surface.

As illustrated in FIG. 2B, the housing 80 of the optical disk unit is provided with an upper housing 80U which holds an optical disk and a lower housing 80S which holds an optical system or drive system. The width of the lower housing 80S of the optical disk unit 8 is narrower than the upper housing 80U in the case where the optical disk unit 8 is inserted by sliding it to the disk unit mounting region 12 which is provided at the main component 10.

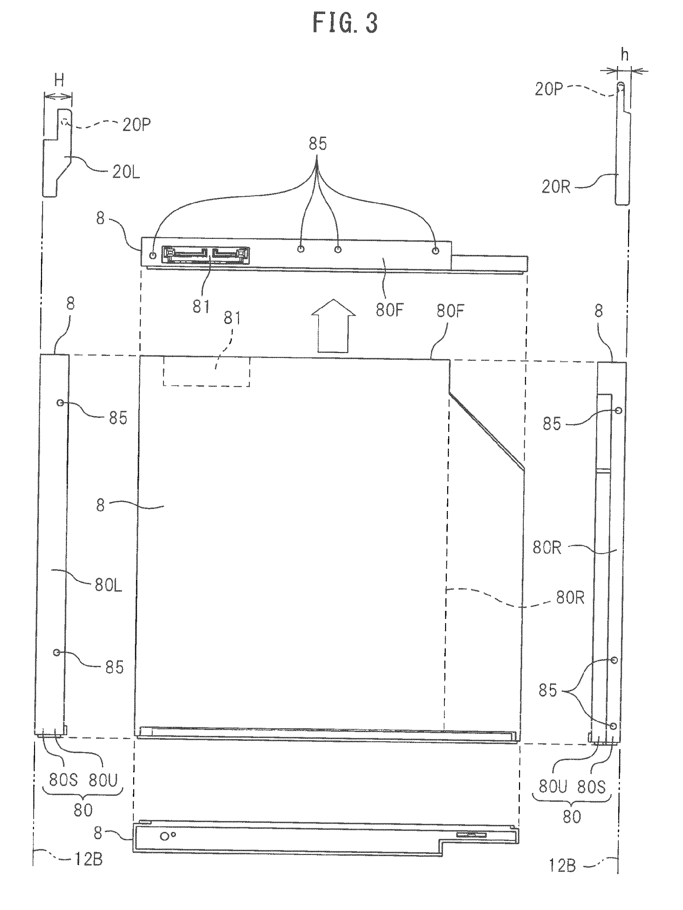

FIG. 3 is a five-direction view which illustrates the five surfaces of the optical disk unit 8 which is illustrated in FIGS. 2A and 2B other than the surface on which a hub 84 is provided and illustrates the guide ribs. The two-dot chain lines in FIG. 3 illustrate the position of the bottom surface when mounting the optical disk unit 8 in the disk unit mounting region. As explained above, when making the optical disk unit 8 move in the direction which is illustrated by the arrow mark so as to mount it in the disk unit mounting region 12, the front surface 80F which forms the front end part is provided with an input/output connector 81. Further, the front surface 80F and the right side surface 80R and left side surface 80L are provided with screw holes 85. The right side surface 80R where the screw holes 85 are provided is the lower housing 80S, while the left side surface 80L where the screw holes 85 are provided is the upper housing 80U. The screw holes 85 generally have M2 tap screws fastened into them.

Therefore, when mounting the optical disk unit 8 in the disk unit mounting region, among the guide ribs 20 which are provided at the bottom surface, the right side guide rib 20R guides the right side surface 80R, while the left side guide rib 20L guides the left side surface 80L. For this reason, the height "h" of the guide rib 20R, which guides the right side surface 80R, from the bottom surface is lower than the height H of the guide rib 20L, which guides the left side surface 80L, from the bottom surface. In the present application, the ends of the guide ribs 20L and 20R at the downstream sides in the direction of insertion of the optical disk unit 8 are extended to be able to swing. Their front end parts are provided with projections 20P which engage with screw holes 85 which are provided at the left side surface 80L and the right side surface 80R of the optical disk unit 8.

Below, the guide ribs 20 will be explained in detail. The guide ribs include the guide ribs 21 to 25 at set positions in the disk unit mounting region. "Guide ribs 20" is used to refer to these all together. Further, in the guide ribs 20 to 25, the letter "F" indicates a fixed part which is fixed to the disk unit mounting region, the letter "M" indicates a moving part which can swing from the fixed part in a direction parallel to the bottom surface, and the letter "P" indicates a projection for engagement use which is provided at a front end of a moving part.

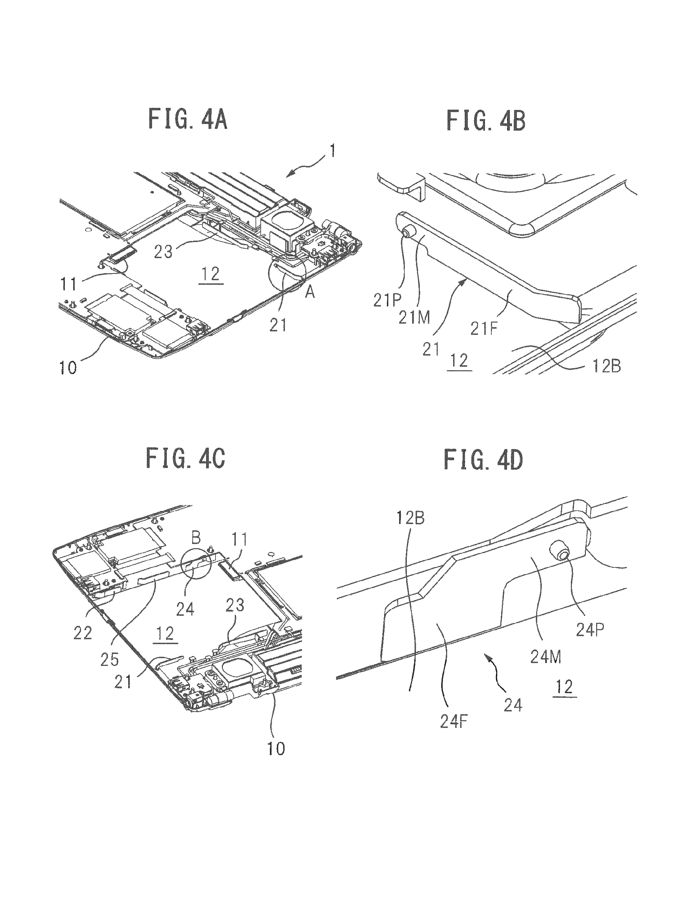

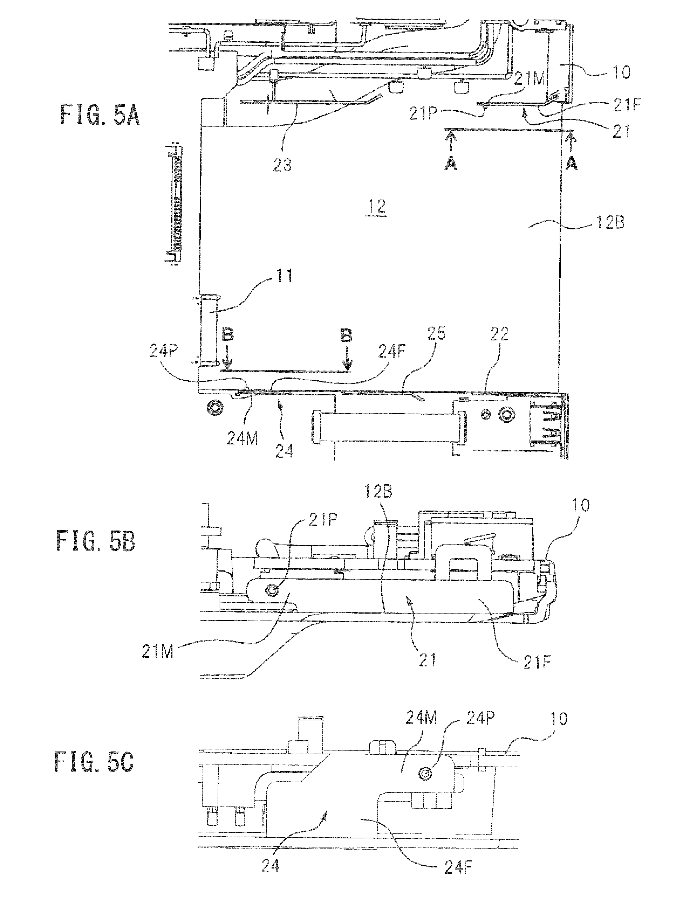

FIG. 4A is a perspective view which illustrates the extracted principal parts of the main component 10 of the electronic apparatus 1 which is illustrated in FIG. 2A, FIG. 4B is a partially enlarged view of a part A of FIG. 4A, FIG. 4C is a perspective view of the portion which is illustrated in FIG. 4A as seen from an opposite side direction, FIG. 4D is a partially enlarged view of a part B of FIG. 4C, FIG. 5A is a plan view which illustrates the extracted principal parts of a main component of the electronic apparatus which is illustrated in FIG. 2A, FIG. 5B is a side view as seen from a line A-A of FIG. 5A, and FIG. 5C is a side view as seen from a line B-B of FIG. 5A.

In this embodiment, the disk unit mounting region 12 is provided with first to fifth, that is, five, guide ribs 20. The first guide rib 21 is provided at the right side near the entrance of the disk unit mounting region 12 into which the optical disk unit 8 is inserted, while the second guide rib 22 is provided at the left side. Further, the third guide rib 23 is provided at the deep right side of the disk unit mounting region 12, while the fourth guide rib 24 is provided at the deep left side. Furthermore, in this embodiment, the fifth guide rib 25 is provided between the second and the fourth guide ribs 22 and 24. The reason why the disk unit mounting region 12 is provided with the plurality of guide ribs 20 in this way is so as to prevent the optical disk unit 8 which is mounted in the disk unit mounting region 12 from being slanted from the correct mounting position.

The electronic apparatus is a type with a built-in disk unit. When the optical disk unit 8 is mounted by being slid into the disk unit mounting region 12 of the electronic apparatus main component 10, there are ribs serving as slide guides at the two sides of the disk unit mounting region 12. However, these ribs only guide the optical disk unit 8 to the correct position inside of the disk unit mounting region 12 and stick out from the bottom surface 12B of the disk unit mounting region 12. Further, the optical disk unit 8 was fastened to the electronic apparatus main component using mounting hardware as explained in the comparative art.

Therefore, in the present application, in an electronic apparatus which has a built-in disk unit, when the disk unit is mounted by being slid into the disk unit mounting region of the electronic apparatus main component, the existing guide ribs are utilized to fasten the disk unit at the disk unit mounting region. In the embodiment which is illustrated in FIGS. 4A to 4D and FIGS. 5A to 5C, the first guide rib 21 and the fourth guide rib 24 are used to fasten the optical disk unit 8 in the disk unit mounting region, so here, the first guide rib 21 and the fourth guide rib 24 will be explained. Note that, the remaining guide ribs 22, 23, and 25 are ones which just guide the optical disk unit 8. These guide ribs are not provided with moving parts.

The guide rib 21, as illustrated in FIG. 4B and FIG. 5B, is provided with a fixed part 21F which projects out from the bottom surface 12B of the disk unit mounting region 12 and a moving part 21M which extends from the fixed part 21F to deep in the disk unit mounting region 12. Further, the front end side of the moving part 21M is formed with a projection 21P which sticks out in the direction of the disk unit mounting region 12. The guide rib 21 guides the right side surface 80R of the lower housing of the optical disk unit 8 which was explained in FIG. 3 and corresponds to the guide rib 20R. Accordingly, the guide rib 21 is formed low in height from the bottom surface 12B.

Further, the bottom surface 12B of the disk unit mounting region 12 is made of plastic. Accordingly, the guide rib 21 which is formed integrally with the bottom surface 12B and sticks out from the bottom surface 12B is also made of plastic. For this reason, the moving part 21M which extends from the fixed part 21F has springiness by which it deforms with respect to the fixed part 21F to move in a direction away from the disk unit mounting region 12 when the projection 21P is pushed. Therefore, if the force pushing against the projection 21P is removed, the moving part 21M returns to its original position. That is, the moving part 21M can swing with respect to the fixed part 21F. The mold of the guide ribs is formed so as to enable adjustment of the spring shape of the moving part 21M.

On the other hand, the guide rib 24, as illustrated in FIG. 4D and FIG. 5C, is provided with a fixed part 24F which projects out from the bottom surface of the disk unit mounting region 12 and a moving part 24M which extends from the upper end part of the fixed part 24F to deep in the disk unit mounting region 12. Further, the front end side of the moving part 24M is formed with a projection 24P which sticks out in the direction of the disk unit mounting region 12. The guide rib 24 guides the left side housing of the optical disk unit 8 which was explained in FIG. 3. Further, the left side housing of the optical disk unit 8 is provided with a screw hole 85 at the left side surface 80L of the upper housing. Accordingly, the moving part 24M which is provided with the projection 24P which engages with the screw hole 85 is extended from the upper end part of the fixed part 24F to deep in the disk unit mounting region 12. The guide rib 24 corresponds to the guide rib 20L which is illustrated in FIG. 3 and is formed high in height from the bottom surface 12B.

The guide rib 24 which is formed at the bottom surface 12B and projects out from the bottom surface 12B is also made of plastic. For this reason, the moving part 24M which extends from the fixed part 24F has springiness by which it deforms with respect to the fixed part 24F to move in a direction away from the disk unit mounting region 12 when the projection 24P is pushed. Therefore, if the force pushing against the projection 24P is removed, the moving part 24M returns to its original position. That is, the moving part 24M can swing with respect to the fixed part 24F.

Note that, the projections 21P and 24P which are provided at the guide ribs 21 and 24 engage with the screw holes 85 at the side surfaces of the optical disk unit 8, so their front end parts are shaped into circular boss shapes in consideration of engagement with the screw holes 85. The screw holes 85 which are provided at the side surfaces of the optical disk unit 8, as explained above, are provided with diameters enabling M2 tap screws to be inserted, but depending on the manufacturer, the screw holes 85 will differ in depth in a range of 1.2 mm to 1.5 mm. However, the amount of overlap of male threads and female threads in screw fastening is a minimum of 1.2 mm as common specifications, so it is sufficient to make the heights of the projections 21P and 24P from the moving parts 21M and 24M a maximum of 1.2 mm and make fine adjustments when necessary while viewing the mountability of the unit. Further, when taking out the optical disk unit 8 from the disk unit mounting region 12, if applying a pulling force of the engagement force or more in the horizontal direction, the moving parts 21M and 24M will deform and thereby the projections 21P and 24P and screw holes 85 will disengage to allow the optical disk unit 8 to be taken out.

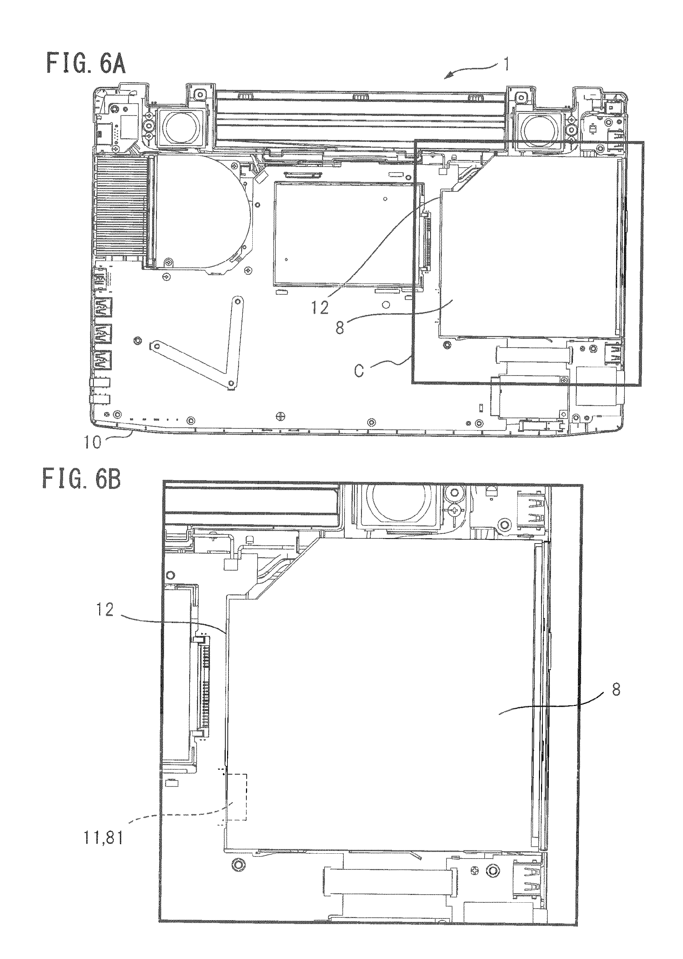

FIG. 6A is a plan view which illustrates a state where an optical disk unit 8 is mounted at the main component 10 of the electronic apparatus 1 which is illustrated in FIG. 2A, while FIG. 6B is a partially enlarged view of a part C of FIG. 6A and illustrates the same portion as FIG. 5A. If the optical disk unit 8 is inserted by being slid into the disk unit mounting region 12, the optical disk unit 8 will first be guided by the guide ribs 21 and 22 which are illustrated in FIG. 5A and enter into the disk unit mounting region 12.

Along with insertion of the optical disk unit 8, if the right side surface of the optical disk unit 8 abuts against the projection 21P which is provided at the moving part 21M of the guide rib 21, the moving part 21M will deform with respect to the fixed part 21F to the outside of the disk unit mounting region 12. As a result, the projection 21P will not obstruct insertion of the optical disk unit 8. If the optical disk unit 8 is further inserted and the left side surface of the optical disk unit 8 abuts against the projection 24P which is provided at the moving part 24M of the guide rib 24, the moving part 24M will deform with respect to the fixed part 24F to the outside of the disk unit mounting region 12. As a result, the projection 24P will not obstruct insertion of the optical disk unit 8.

Further, in the state which is illustrated in FIG. 6B where the optical disk unit 8 is completely housed in the disk unit mounting region 12, the input/output connectors 11 and 81 are connected and the projections 21P and 24P are engaged with the above-mentioned screw holes which are provided at the side surfaces of the optical disk unit 8. As a result, the optical disk unit 8 is fastened to the disk unit mounting region 12. At the instant where the input/output connectors 11 and 81 are connected, the frictional force increases, so the optical disk unit 8 has to be strongly pushed. On the other hand, the force pushing against the optical disk unit 8, which increases when the projections 21P and 24P enter the screw holes, is generated at the same time as engagement of the input/output connectors 11 and 81. For this reason, the force pushing against the optical disk unit 8, which increases when the projections 21P and 24P enter the screw holes, is concealed by the increase in the pushing force which is generated at the time of engagement of the input/output connectors 11 and 81, so there is no effect on the operation of insertion of the optical disk unit 8.

In the disk unit mounting region 12, the number of projections of the guide ribs 20 which fasten the optical disk unit 8 should be at least one each at the right side and the left side in the direction of insertion of the optical disk unit 8 at the disk unit mounting region 12. In the disk unit mounting region 12, as illustrated in FIG. 5A, an embodiment which illustrates which guide ribs 20 should be provided with projections 20P which engage with the optical disk unit 8 when five guide ribs 21 to 25 are provided will be explained next.

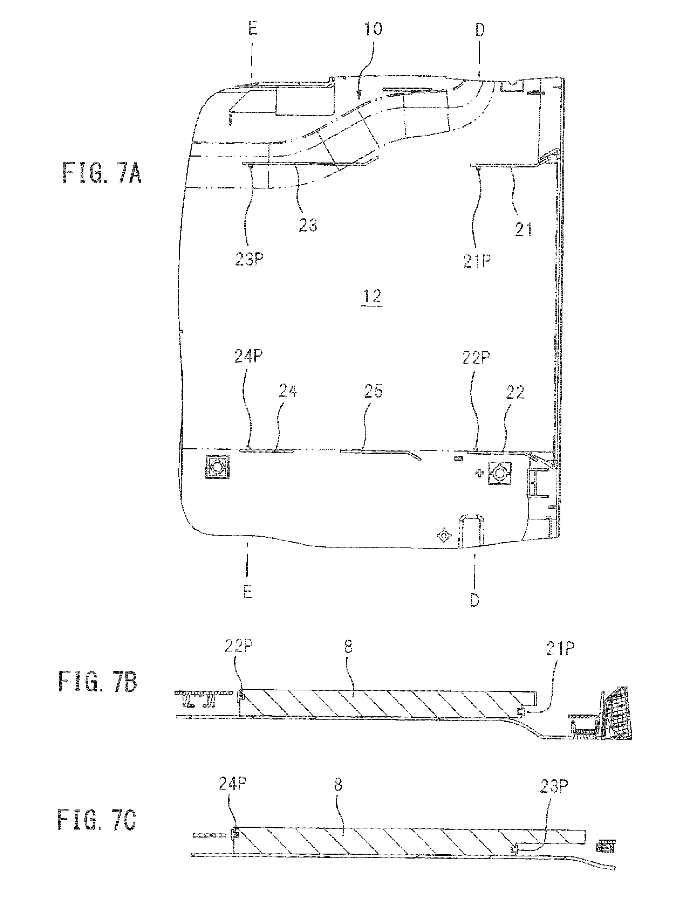

FIG. 7A is a partially enlarged plan view which illustrates a first embodiment of arrangement of projections 20P for fastening a disk unit, FIG. 7B is a cross-sectional view along a line D-D of FIG. 7A, and FIG. 7C is a cross-sectional view along a line E-E of FIG. 7A. In the first embodiment, among the guide ribs 21 to 25, the four guide ribs of the guide ribs 21 to 24 are provided with projections 21P, 22P, 23P, and 24P. Therefore, in the first embodiment, the optical disk unit 8 is fastened to the disk unit mounting region 12 by the projections 21P, 22P, 23P, and 24P at the four guide ribs as illustrated in FIGS. 7B and 7C.

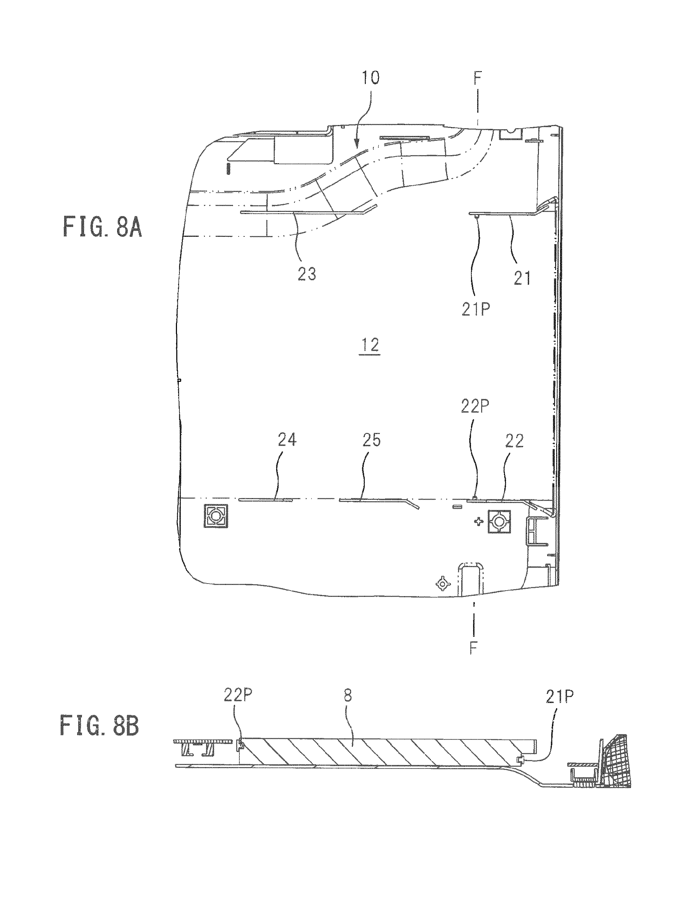

FIG. 8A is a partially enlarged plan view which illustrates a second embodiment of arrangement of projections 20P for fastening a disk unit, while FIG. 8B is a cross-sectional view along a line F-F of FIG. 8A. In the second embodiment, among the guide ribs 21 to 25, the guide ribs 21 and 22 which are at the entrance side of the disk unit mounting region 12 where the optical disk unit 8 is inserted are provided with projections 21P and 22P. Therefore, in the second embodiment, the optical disk unit 8 is fastened to the disk unit mounting region 12 by the projections 21P and 22P at the two guide ribs as illustrated in FIG. 8B.

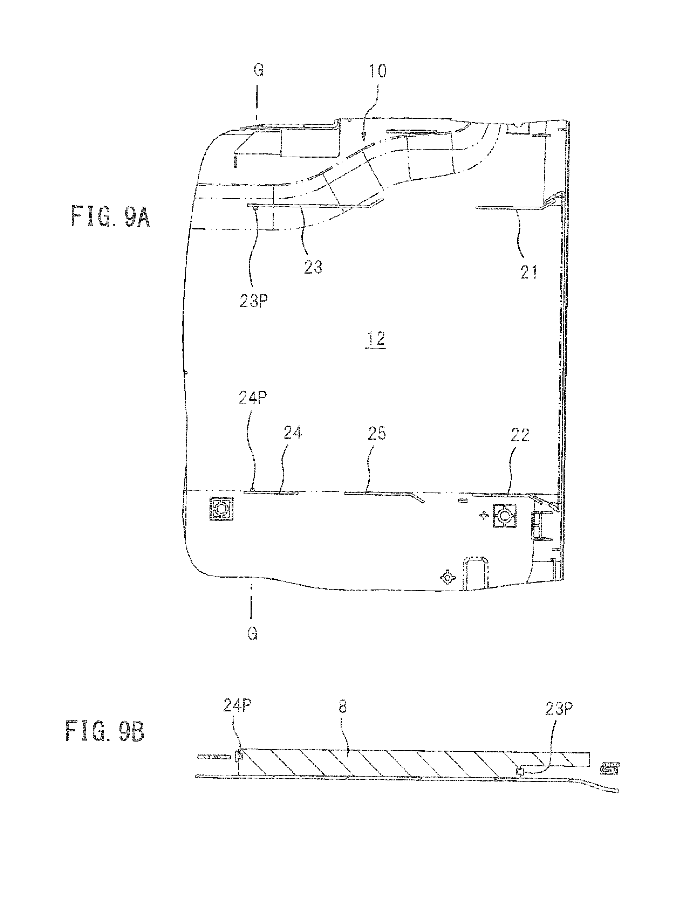

FIG. 9A is a partially enlarged plan view which illustrates a third embodiment of arrangement of projections 20P for fastening a disk unit, while FIG. 9B is a cross-sectional view along a line G-G of FIG. 9A. In the third embodiment, among the guide ribs 21 to 25, the guide ribs 23 and 24 which are deep inside the disk unit mounting region 12 far from the side where the optical disk unit 8 is inserted are provided with projections 23P and 24P. Therefore, in the third embodiment, the optical disk unit 8 is fastened to the disk unit mounting region 12 by the projections 23P and 24P at the two guide ribs as illustrated in FIG. 9B.

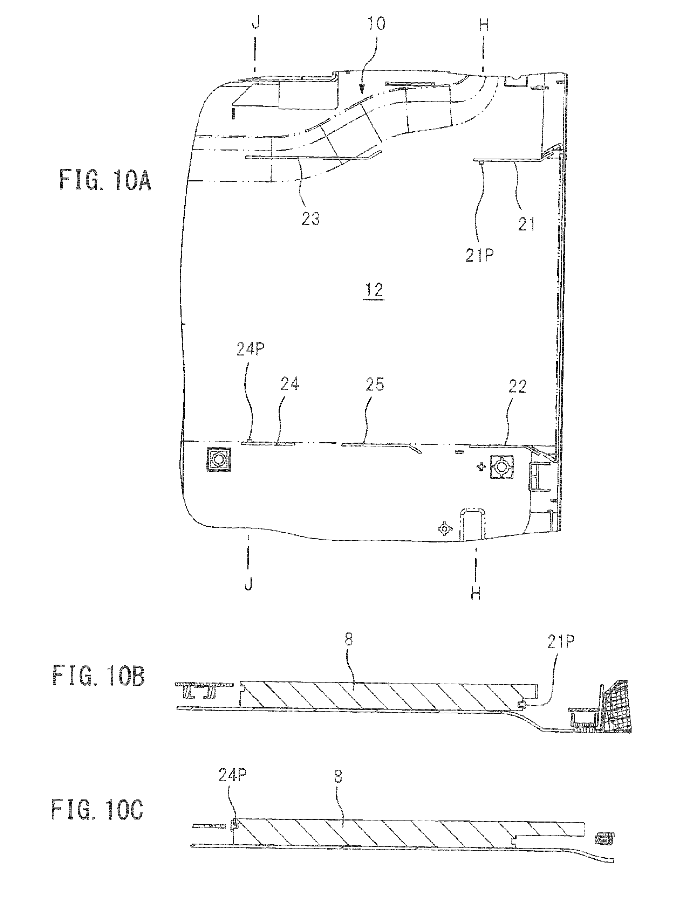

FIG. 10A is a partially enlarged plan view which illustrates a fourth embodiment of arrangement of projections 20P for fastening a disk unit, FIG. 10B is a cross-sectional view along a line H-H of FIG. 10A, and FIG. 10C is a cross-sectional view along a line J-J of FIG. 10A. In the fourth embodiment, among the guide ribs 21 to 25, the guide rib 21 which is at the entrance side of the disk unit mounting region 12 where the optical disk unit 8 is inserted and the guide rib 24 deep inside are provided with projections 21P and 24P. The fourth embodiment corresponds to the embodiments which are explained in FIGS. 5A to 5C. Therefore, in the fourth embodiment, the optical disk unit 8 is fastened to the disk unit mounting region 12 by the projections 21P and 24P at the two guide ribs as illustrated in FIGS. 10B and 10C.

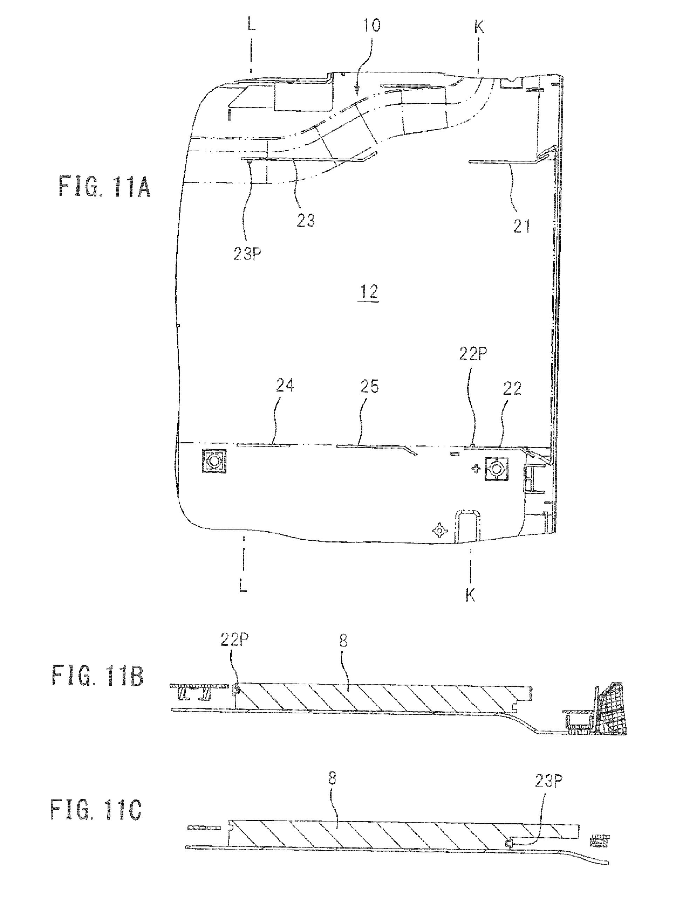

FIG. 11A is a partially enlarged plan view which illustrates a fifth embodiment of arrangement of engagement projections 20P for fastening a disk unit, FIG. 11B is a cross-sectional view along a line K-K of FIG. 11A, and FIG. 11C is a cross-sectional view along a line L-L of FIG. 11A. In the fifth embodiment, among the guide ribs 21 to 25, the guide rib 22 which is at the entrance side of the disk unit mounting region 12 and the guide rib 22 deep inside are provided with projections 22P and 23P. Therefore, in the fifth embodiment, the optical disk unit 8 is fastened to the disk unit mounting region 12 by the projections 22P and 23P at the two guide ribs as illustrated in FIGS. 11B and 11C.

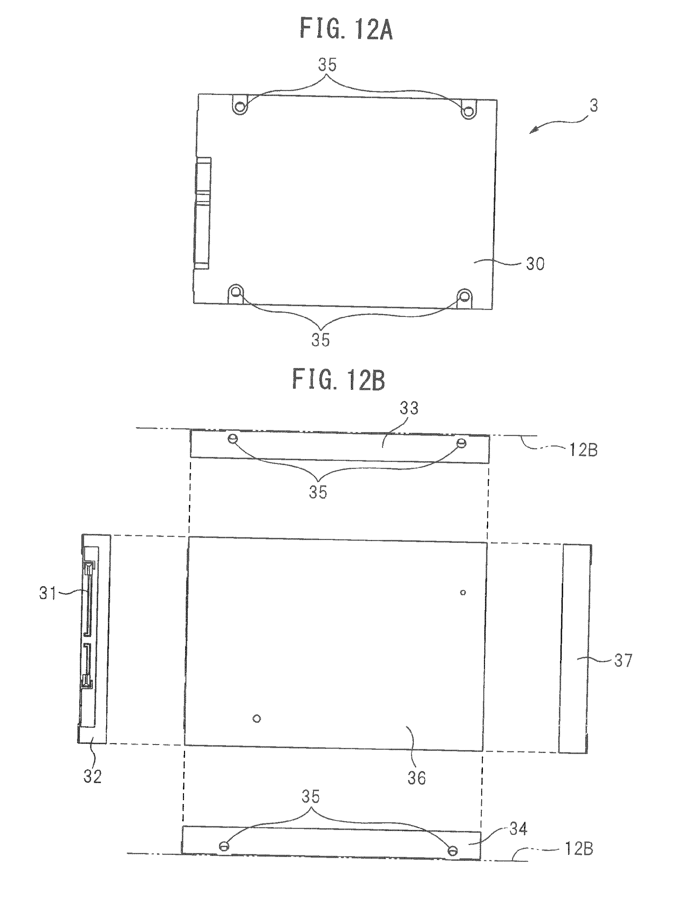

FIG. 12A is a bottom surface view of the bottom surface of a hard disk unit 3 of another example which is mounted at the electronic apparatus of the present application, while FIG. 12B is a five-direction view of the hard disk unit 2 which is illustrated in FIG. 12A other than the bottom surface 30. The disk unit which is mounted in the electronic apparatus of the present application may also be a hard disk unit 3 in addition to an optical disk unit. FIG. 12B illustrates a hard disk unit 3 with a front surface 32 where an input/output connector 31 is provided and two side surfaces 33 and 34, a top surface 36, and a back surface 37 where screw holes 35 are provided. Further, the position which is illustrated by the two-dot chain line is the position of the bottom surface 12B of the disk unit mounting region 12.

When the disk unit is a hard disk unit 3, as illustrated in FIG. 12B, the heights of the screw holes 35 which are provided at the two side surfaces 33 and 34 from the bottom surface 12B are the same. Therefore, when the disk unit is a hard disk unit 3, the guide ribs which are provided at the two sides of the disk unit mounting region 12 may be made guide ribs of the same shape in a mirror image relationship. Further, it is clear that the present application may be applied to not only disk units, but also media write units or medium read units.

As explained above, the fastening device of a removable unit in the present application makes part of the guide ribs for sliding of the removable unit in the unit mounting region in the housing of the electronic apparatus cantilever spring structures and provides those parts with projections which engage with the removable unit. For this reason, according to the mounting structure of a removable unit of the present application, the structure is simple, the number of brackets, screws, and other parts is slashed, the steps in attachment of the removable unit are also reduced, and the maintenance ability is improved.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. A mounting structure of a removable unit in an electronic apparatus in the case of later attachment of a removable unit (8) to a mounting region (12) of a removable unit which is provided in an electronic apparatus (1), **characterized in that**
two sides of a mounting region (12) of the removable unit are respectively provided with pluralities of guide ribs (20),
each guide rib (20) is provided with a fixed part (21F) which projects from a bottom surface of the mounting region (12) along a direction of insertion of the removable unit (8) into the mounting region (12) and a moving part (21M) which extends to be able to swing from one end of the fixed part (21F) in the direction of insertion of the removable unit (8),
a projection (21P) which sticks out to the mounting region side is provided at a front end part of the moving part (21M) of at least one of the guide ribs which are provided at one side of the mounting region,
the positions of the projections (21P) correspond to positions of screw holes (85) which are provided at side surfaces of the removable unit (8) when the removable unit (8) is completely housed in the mounting region (12), and
the projections (21P) respectively fit into the screw holes (85) in the state where the removable unit (8) is completely housed in the mounting region (12).

2. The mounting structure of a removable unit according to claim 1, wherein a bottom surface (12B) of the mounting region (12) is formed by a plastic and wherein the guide ribs (20) are formed integrally with the bottom surface (12B) by the same grade of plastic.

3. The mounting structure of a removable unit according to claim 1 or 2, wherein the guide ribs (20) are provided one each at facing positions of the two sides of the mounting region (12) at the insertion side of the removable unit (8) and one each at facing positions of the two sides deep in the mounting region (12).

4. The mounting structure of a removable unit according to claim 3, wherein the engagement projections (21P) are provided at moving parts (21M) of all of the guide ribs (20).

5. The mounting structure of a removable unit according to claim 3, wherein the engagement projections (21P) are provided at moving parts (21M) of the guide ribs at facing positions at the two sides of the mounting region (12) at the insertion side of the removable unit (8).

6. The mounting structure of a removable unit according to claim 3, wherein the engagement projections (21P) are provided at moving parts (21M) of the guide ribs at facing positions at the two sides of the mounting region (12) at the deep side of the removable unit (8).

7. The mounting structure of a removable unit according to claim 3, wherein the engagement projections (21P) are provided one at any of the moving parts (21M) of the guide ribs positioned in the mounting region (12) at an insertion side of the removable unit (8) and at the moving part (21M) of the guide rib at the other side at the deep side of the removable unit (8).

8. The mounting structure of a removable unit according to any one of claims 1 to 7, wherein a guide rib (25) with no engagement projection is provided at an intermediate position of a guide rib (20) in the mounting region (12) at an insertion side of the removable unit (8) and a guide rib (20) in the mounting region (12) at a deep side of the removable unit (8).

9. The mounting structure of a removable unit according to any one of claims 1 to 8, wherein the removable unit (8) with which the engagement projections (21P) of the guide ribs (20) engage is an optical disk unit and wherein the guide ribs (20) differ in height from the bottom surface at the left and right in the insertion direction of the optical disk unit.

10. The mounting structure of a removable unit according to any one of claims 1 to 8, wherein the removable unit (8) with which the engagement projections (21P) of the guide ribs (20) engage is a hard disk unit and wherein the guide ribs (20) are the same in height from the bottom surface at the left and right in the insertion direction of the hard disk unit.

11. The mounting structure of a removable unit according to any one of claims 1 to 10, wherein screw holes (65) which the engagement projections (21P) of the guide ribs (20) engage and which are provided in advance at side surfaces of the removable unit (8) are existing screw holes which are present at side surfaces of the removable unit (8) for fastening the removable unit.

12. An electronic apparatus (1) which is provided with a mounting region (12) of a removable unit inside of a main component of the electronic apparatus and which has a removable unit (8) later attached to the mounting region (12) of a removable unit, wherein the mounting region (12) of a removable unit is provided with a mounting structure of a removable unit according to any of claims 1 to 11.
